# EUROPÄISCHE PATENTSCHRIFT

(11) **EP 4 193 450 B1**
(45) Veröffentlichungstag und Bekanntmachung des Hinweises auf die Patenterteilung: **29.05.2024**
(21) Anmeldenummer: 21758114.9
(22) Anmeldetag: 10.08.2021
(51) Int. Cl.: H02K 1/20, H02K 3/12, H02K 3/24, H02K 3/34, H02K 9/197, H02K 9/12, H02K 3/48, H02K 1/32, H02K 1/18, H02K 3/487, H02K 15/10, H02K 15/06

(54) **WINDKRAFTANLAGE MIT ZUMINDEST EINER DYNAMOELEKTRISCHEN MASCHINE**
WIND TURBINE WITH AT LEAST ONE DYNAMO-ELECTRIC MACHINE
ÉOLIENNE AVEC AU MOINS UNE MACHINE DYNAMOÉLECTRIQUE

(30) Priorität: 10.08.2020 EP 20190188
(43) Veröffentlichungstag der Anmeldung: 14.06.2023
(73) Patentinhaber: Flender GmbH, 46395 Bocholt (DE)
(72) Erfinder: TERINGL, Claus, 94060 Pocking (DE); WINKLHOFER, Michael, 94060 Pocking (DE)
(74) Vertreter: Michalski Hüttermann & Partner Patentanwälte mbB
(86) Internationale Anmeldenummer: PCT/EP2021/072307
(87) Internationale Veröffentlichungsnummer: WO 2022/034105

(56) Entgegenhaltungen:
- EP-A1- 3 223 394
- DE-A1-102017 222 635
- DE-A1-102018 219 219
- US-A- 4 994 700
- US-A1- 2007 176 509
- US-A1- 2020 204 022

## Beschreibung

Die Erfindung betrifft eine Windkraftanlage mit zumindest einer dynamoelektrischen Maschine mit Flüssigkeitskühlung und ein Verfahren zur Herstellung von dazu erforderlichen Kühlkanälen.

Dynamoelektrische Maschinen müssen aufgrund ihrer Verluste, Eisenverluste, Leiterverluste etc. gekühlt werden. Für eine effiziente Kühlung reicht meist eine Luftkühlung nicht mehr aus, so dass eine Flüssigkeitskühlung, insbesondere Wasserkühlung oder Ölkühlung, vorgesehen wird. Dafür sind jedoch Kühlkanäle in dem magnetisch leitfähigen Körper der dynamoelektrischen Maschine, also Stator und/oder Rotor, notwendig. Diese Kühlkanäle sind gegebenenfalls in einem Blechschnitt vorzusehen, wie dies der DE 24 62 150 oder der EP 0 684 682 B1 zu entnehmen ist. Dadurch verändert sich jedoch der magnetische Fluss im Betrieb der dynamoelektrischen Maschine, so dass weitere Verluste entstehen.

Aus der DE 10 2018 219 219 A1, der EP 3 223 394 A1 oder der DE 10 2017 222 635 A1 sind dynamoelektrische Maschinen bekannt, die einen Stator und einem Rotor aufweisen, wobei zumindest der Stator flüssigkeitsgekühlt ist, wobei zumindest der Stator ein Wicklungssystem aufweist, das in Nuten (18) eines magnetisch leitfähigen Körpers des Stators eingebettet ist, wobei das Wicklungssystem zwischen einem Leiter des Wicklungssystems und einer Nutwandung eine Isolierung aufweist, und wobei zwischen Isolierung und Nutwandung zumindest ein Kühlkanal vorgesehen ist. Alle drei Lösungen beziehen sich auf Motoren für Fahrzeuganwendungen.

Aus der US 4,994,700 ist eine dynamoelektrische Maschine mit einem Spaltrohr zwischen Rotor und Stator bekannt. Rotor und Stator werden dort mit Öl gekühlt.

In Windkraftanlagen sind die Anforderungen an die Kühlung der als Generator wirkenden dynamoelektrischen Maschine aber deutlich höher, da dort höchste Leistungen im MW-Bereich, enger Bauraum, raue Bedingungen(offshore) und kaum Wartungs- oder Reparaturmöglichkeiten vorliegen, die es erforderlich machen, dass die Generatoren lange Zeit trotz Dauerbetriebs zuverlässig arbeiten müssen und nicht ausfallen dürfen. Ausgehend davon liegt der Erfindung die Aufgabe zugrunde, eine Windkraftanlage mit mindestens einer dynamoelektrischen Maschine zu schaffen, die einfach herzustellen ist und eine hohe Effizienz aufweist, ohne dass die magnetischen Eigenschaften des magnetischen leitfähigen Körpers des Stators und/oder Rotors beeinträchtigt werden, und die eine hohe Zuverlässigkeit unter widrigen Bedingungen hat.

Die Lösung der gestellten Aufgabe gelingt durch eine Windkraftanlage mit mindestens einer dynamoelektrischen Maschine mit den Merkmalen des Anspruchs 1. Ausführungen der Erfindung sind Gegenstände von Unteransprüchen. Die Lösung der gestellten Aufgabe gelingt auch durch ein Herstellverfahren des Anspruchs 8.

Erfindungsgemäß befinden sich nunmehr zwischen Nutwandung und Hauptisolierung ein oder mehrere insbesondere axial verlaufender Kühlkanal/-kanäle. Der oder die Kühlkanäle sind durch Vertiefungen in der Hauptisolation gebildet und liegen direkt berührend an der Nutenwand (ohne Isolationsmaterial dazwischen) und kühlen so besonders effizient das Metall der Zähne. Die Vertiefungen liegen bevorzugt in Umfangsrichtung, also je zwischen Nutwand und Leiterisolierung. Mit dem Ausdruck "Hauptisolierung" ist die umfassende Spulenschenkelisolation gemeint und nicht eine Teilleiterisolation. Die Hauptisolierung umfasst häufig mehrere Teilleiter, die ihrerseits eigene Teilleiterisolierungen aufweisen.

Erfindungsgemäß ist ein durch einen Luftspalt der dynamoelektrischen Maschine verlaufendes Spaltrohr zwischen Stator und Rotor vorgesehen, wodurch unterschiedliche Kühlprinzipien eingesetzt werden, so kann der Stator flüssigkeitsgekühlt (Öl, Wasser) sein und der Rotor gasgekühlt (Luft). Besonders günstig ist die Aufnahme der Wickelköpfe, in denen sich bei Windkraftanlagen relativ viel Wärme entsteht, in den Flüssigkeitskühlkreislauf des Stators, um die dort entstehende Wärme zuverlässig auszuleiten.

Der Kühlkanal ist in die Hauptisolierung des Wicklungssystems eingeprägt. Dies geschieht während der Herstellung des Wicklungssystems, bei dem ein oder mehrere Leiter mit einer Hauptisolierung versehen werden und dabei die Hauptisolierung mit einer vorgegebenen Prägung derart gepresst wird, dass ein oder mehrere Vertiefungen in der Hauptisolierung entstehen. Diese Kühlkanalprägungen bilden in der Maschine zusammen mit den Nutwandungen axial verlaufende Kühlkanäle.

Die Formgestaltung der Nut und des magnetisch leitfähigen Körpers, also eines Blechpakets, kann somit erhalten bleiben. Demnach bleiben auch die magnetischen Verhältnisse des magnetisch leitfähigen Körpers unverändert vorteilhaft.

Das Wicklungssystem ist vorteilhafterweise durch vorab herstellbare Formspulen aufgebaut, die während des Herstellprozesses bereits mit den Kühlkanalprägungen versehen werden können.

Um die Formspule radial über einen Nutschlitz einzusetzen ist es vorteilhaft, wenn die Nutwandungen parallel oder mit einem geringen Öffnungswinkel Richtung Luftspalt verlaufen.

Das Wicklungssystem ist dabei aus Leitern geformt, die Formspulen bilden. Diese Formspulen werden vorab gewickelt und isoliert. Nachdem die Formspulen ihre Hauptisolierung erhalten haben, erhalten sie im Bereich der späteren Nutabschnitte Vertiefungen. Danach werden die Formspulen mittels Schablonen in die jeweilige Form gebracht.

Vorteilhafterweise befindet sich die Vertiefung der Hauptisolierung im mittleren Bereich des Leiters bzw. der Spule. Damit ergibt sich eine Führung der Spule beim Einlegen in die Nut und eine grobe Abdichtung Richtung Luftspalt. Die Hauptisolierung einer Formspule ist nunmehr, im Querschnitt betrachtet, doppelt-T-Förmig ausgeführt.

Die Erfindung kann bei Einschicht- und Mehrschichtwicklungen eingesetzt werden. Je nachdem ergeben sich ein Kühlkanal oder mehrere Kühlkanäle in einer Nut.

Die Prägung der Hauptisolierung einer Formspule kann auf einer, zwei, drei oder allen Seiten der Spule vorgenommen werden, vorzugsweise wird diese Kühlkanalprägung auf den Längsseiten der Spulen vorgenommen.

Dadurch, dass die Kühlkanäle, insbesondere die Kühlkanalprägungen, axial über den magnetisch leitfähigen Körper ragen, wird die Einströmung einer Kühlflüssigkeit erleichtert.

Dadurch, dass der magnetisch leitfähige Körper, insbesondere als Blechpaket ausgeführt ist, können bisherige Blechschnitte verwendet werden, da sich die Kühlkanäle über die Kühlkanalprägungen der Hauptisolierung ergeben.

Dadurch, dass der magnetisch leitfähige Körper axial in mindestens zwei Teilkörper unterteilt ist, ergeben sich radiale Kühlkanäle, die eine zweiflutige Kühlung des Stators ermöglichen. Dies verbessert die Kühlleistung und führt zu einem gleichmäßigeren Temperaturverlauf axial längs des Stators.

Erfindungsgemäße Windkraftanlagen mit solchen als Generatoren eingesetzten dynamoelektrischen Maschinen haben bei kompakter Bauweise eine hohe Leistungsdichte.

Die Erfindung sowie weitere vorteilhafte Ausgestaltungen der Erfindung werden anhand prinzipiell dargestellter Ausführungsbeispiele näher erläutert; darin zeigen:
- FIG 1: Pressung der Hauptisolation mit einer Detailansicht,
- FIG 2: Anordnung einer Zweischichtwicklung in einer Nut,
- FIG 3: perspektivische Detailansicht einer Zweischichtwicklung in einer Nut eines Stators,
- FIG 4: perspektivische Detailansicht eines Stators,
- FIG 5: Teillängsschnitt einer dynamoelektrischen Maschine und
- Fig. 6: zwei Zweischichtwicklungen.

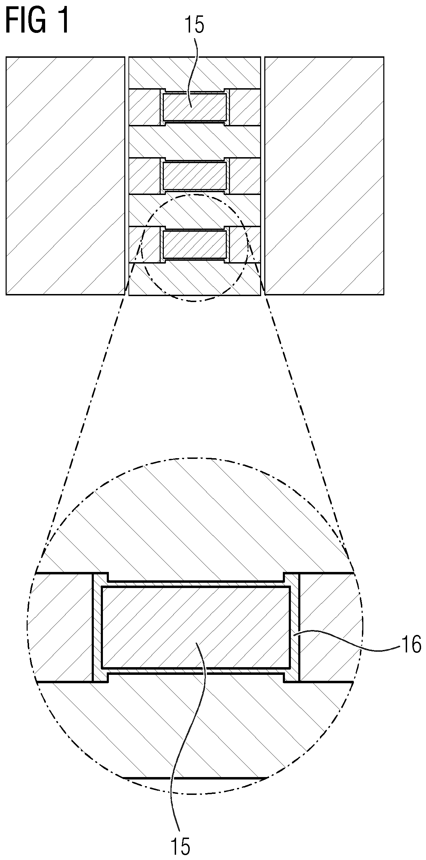

FIG 1 zeigt einen Verfahrensschritt eines prinzipiellen Herstellungsverfahrens einer Formspule 15, deren Leiter aus mehreren Teilleitern oder aus einem Einzelleiter besteht. Sofern Teilleiter vorhanden sind, sind diese zumindest abschnittsweise von einer Teilleiterisolierung umgeben, wobei der gesamte Leiter, zumindest aber im Bereich der Nut 18, also axial innerhalb des magnetisch leitfähigen Körpers, wie einem Blechpaket 4 von einer Hauptisolierung 16 umgeben ist.

Um nunmehr einen erfindungsgemäßen Kühlkanal 9 zu gestalten, wird über eine Kühlkanalprägung, die mittels eines Stempels einer Presse ausgeführt werden kann, die Hauptisolierung 16 an vorgebbaren Bereichen der Hauptisolierung zusammengedrückt. Im vorliegenden, nicht einschränkenden Ausführungsbeispiel geschieht dies vor allem an den Längsseiten der Formspule 15. Durch die Pressung tritt die Hauptisolierung 16 in den vorgegebenen Bereichen gegenüber der ursprünglichen Ausdehnung um einen vorgegebenen Abstand zurück.

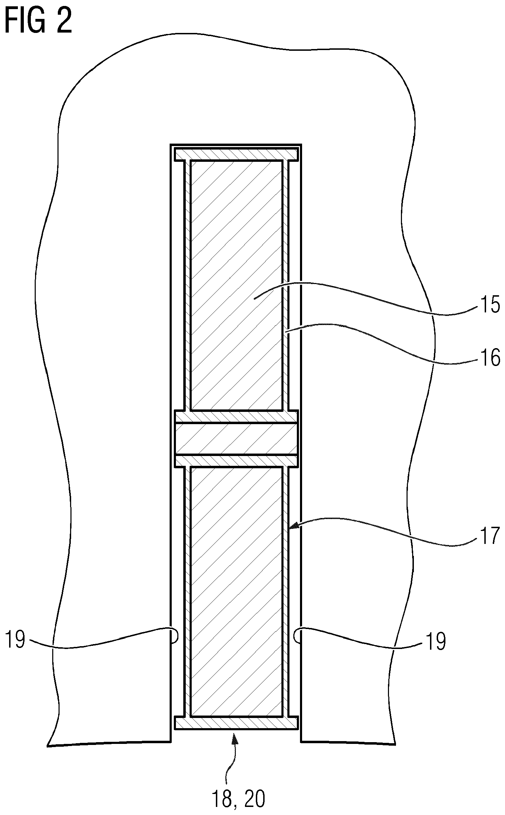

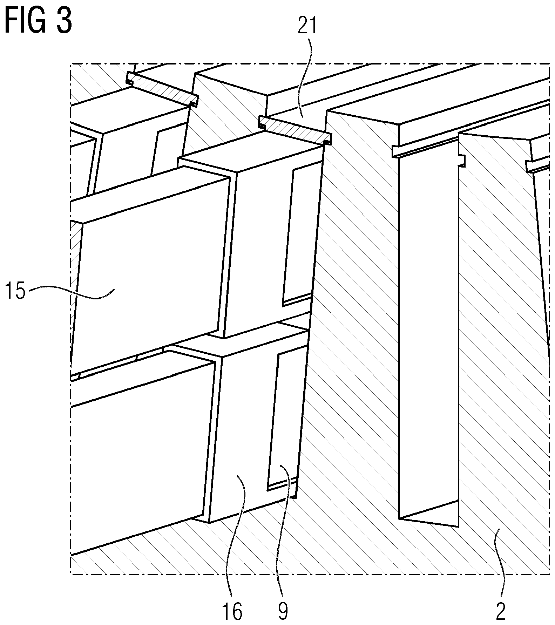

In FIG 2 wird beispielhaft eine Zweischichtwicklung, wie sie in einer Nut 18 angeordnet ist, gezeigt. Dabei sind zwei Formspulen 15 radial übereinander in der Nut 18 angeordnet und durch ein Zwischenelement voneinander getrennt. Jede Formspule 15 weist eine Hauptisolierung 16 auf, an deren Längsseiten durch die Prägung, wie oben beschrieben, die Hauptisolierung zurücktritt, so dass sich dann ein Abstand zwischen einer Nutwandung 19 und der Hauptisolierung 16 ergibt. Dies gestaltet dann einen axial verlaufenden Kühlkanal 9 in einem Stator 2. Die Formspulen 15 werden in die Nut 18 über einen Nutschlitz 20 radial eingesetzt. Die Nutwandungen 19 sind parallel oder mit einem geringen Öffnungswinkel Richtung Luftspalt versehen, um die Montage der Formspulen 15 zu erleichtern. Der Nutschlitz 20 kann, wie in FIG 3 gezeigt, durch einen Nutverschluss 21 abgeschlossenen werden, um das Wicklungssystem, in diesem Fall die Formspulen 15, in der Nut 18 dauerhaft zu positionieren. Je nach Ausführung des Nutverschlusses 21 gestaltet dieser auch das Magnetfeld des Luftspaltes im Betrieb einer dynamoelektrischen Maschine 1 mit.

Durch die reduzierte radiale Dicke der Hauptisolierung 16 an den vorgegebenen Bereichen der Formspule 15 verschlechtert sich die Isolation nicht u.a. auch deshalb, weil eine Ölkühlung eingesetzt wird.

FIG 3 zeigt in einer perspektivischen Detaildarstellung einen Stator 2 mit teilweise durch ein Wicklungssystem belegten Nuten 18. In den durch das Wicklungssystem belegten Nuten 18 befindet sich eine Zweischichtwicklung, d.h. es sind radial betrachtet, zwei Formspulen 15, wie in FIG 2 bereits beschrieben, radial übereinander angeordnet. Die Nut 18 ist mittels eines Nutverschlusses 21 abgeschlossen und in Ausnehmungen von Zähnen des Blechpakets 4 fixiert. Der Kühlkanal 9 ragt axial über die Stirnseite des Blechpakets 4 des Stators 2 um einer Flüssigkeit, insbesondere Öl, den axialen Zugang zu dem Kühlkanal 9 zu ermöglichen. In diesem Ausführungsbeispiel sind somit pro Nut 18 vier parallele Kühlkanäle 9 vorhanden. Jede Formspule 15 hat zwei auf ihrer Längsseite angeordnete Kühlkanalprägungen 17, die durch Pressung der Hauptisolation 16 gebildet wurden.

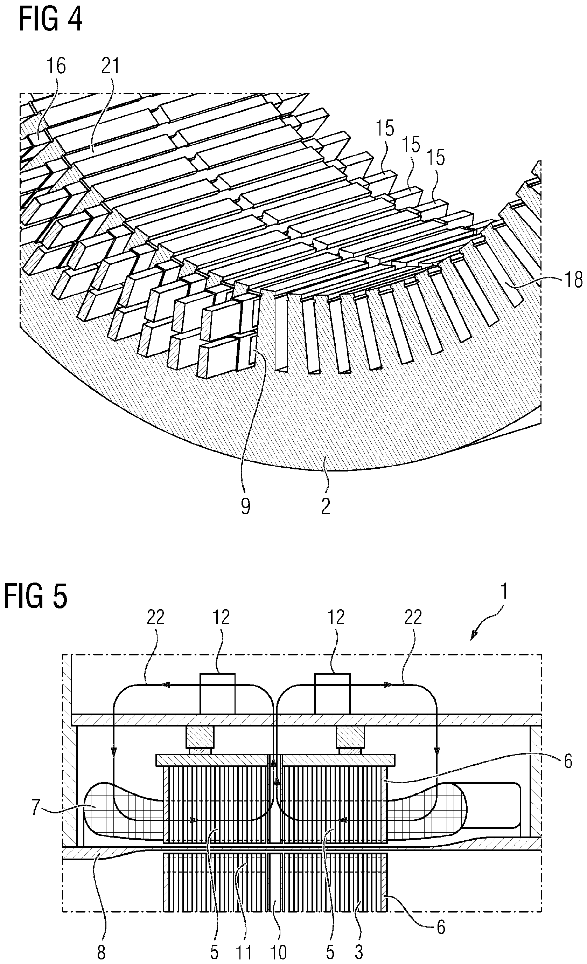

FIG 4 zeigt in einer weiteren perspektivischen Detaildarstellung einen Stator 2 mit teilweise durch ein Wicklungssystem belegten Nuten 18. Dabei ist gezeigt, dass der magnetisch leitfähige Körper des Stators 2, beispielsweise ein Blechpaket 4, in Teilblechpakete 5 aufgeteilt ist. Damit ergeben sich zwischen den Teilblechpaketen 5 radial verlaufende Schlitze, die radiale Kühlkanäle 10 bilden, die einem Kühlmittelfluss 22 aus den Kühlkanälen 9 kommend gestatten, radial auszutreten. Der Nutverschluss 21 ist axial durchgehend ausgeführt und bildet somit einen Abschluss zum Luftspalt, wobei jedoch zwischen den Zähnen der Teilblechpakete 5 radiale Kühlkanäle 10 bzw. Schlitze vorhanden sind, in denen Kühlflüssigkeit, beispielsweise Öl, radial austreten kann und, wie später gezeigt, dementsprechenden Wärmetauschern 12 zuführbar ist.

FIG 5 zeigt in einer prinzipiellen Darstellung einen Teillängsschnitt einer dynamoelektrischen Maschine 1. Dabei ist ein Rotor 3 von dem Stator 2 durch ein Spaltrohr 8 beabstandet, das durch den Luftspalt der dynamoelektrischen Maschine 1 verläuft und es damit ermöglicht, unterschiedliche Kühlmedien für Stator 2 und Rotor 3 vorzusehen. In diesem Ausführungsbeispiel wird nunmehr der Stator 2 durch eine Flüssigkeitskühlung gekühlt. Das Blechpaket 4 des Stators 2 ist dabei aus zwei Teilblechpaketen 5 aufgebaut, so dass sich zwischen den Teilblechpaketen 5 ein radialer Kühlkanal 10 ergibt. Die Teilblechpakete 5 sind durch Druckplatten 6 fixiert. Axial aus den Stirnseiten des Blechpakets 4 ragen Wickelköpfe 7 des Wicklungssystems. Das Spaltrohr 8 ist gegenüber weiteren Gehäuseabschnitten durch nicht näher dargestellte Dichtelemente 13 abgedichtet. Der Rotor 3 ist axial einstückig oder ebenfalls mit Teilblechpaketen aufgebaut. In diesen Ausführungen verläuft ein Kühlkanal 11 axial durch das Blechpaket des Rotors 3. Durch Trennung von Stator 2 und Rotor 3 mittels des Spaltrohres 8 ist es nunmehr möglich, den Rotor 3 mit einer Luftkühlung auszustatten, der thermisch vom Stator 2 separiert ist.

Die Kühlflüssigkeit, insbesondere Öl, wird an einer Stirnseite des Blechpakets 4 über die Wickelköpfe 7 axial in die Kühlkanäle 9 des Stators eingespeist. Über den axialen Verlauf des Wickelkopfes 7 und des Wicklungssystems in der Nut 18 erhitzt sich die Kühlflüssigkeit und wird über den radialen Kühlkanal 10 radial nach außen in Wärmetauscher 12 gefördert. Dort wird die Kühlflüssigkeit rückgekühlt und erneut in den Kreislauf eingespeist.

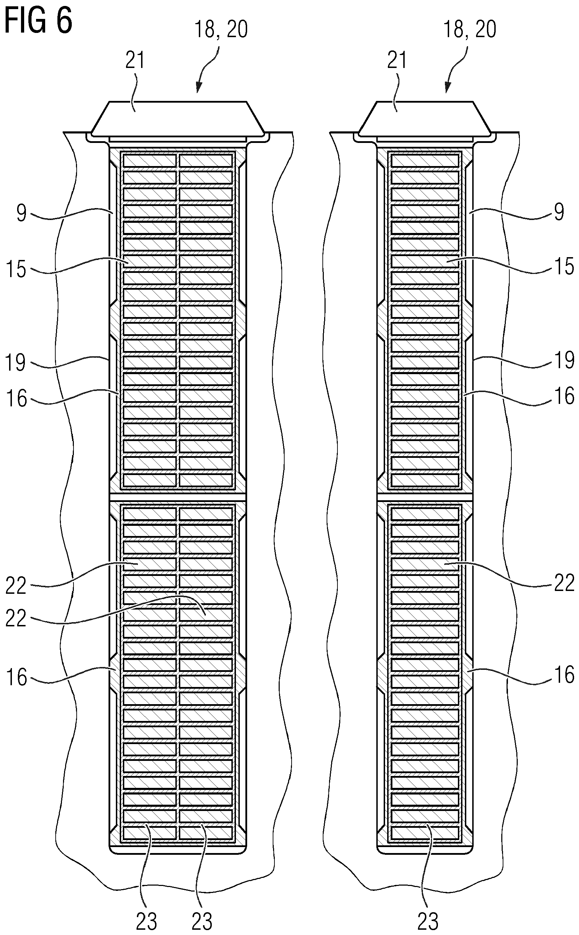

In FIG 6 sind beispielhaft zwei Zweischichtwicklungen, wie sie je in einer Nut 18 angeordnet ist, gezeigt. Dabei sind zwei Formspulen 15 radial übereinander in der Nut 18 angeordnet und durch ein Zwischenelement voneinander getrennt. Die Formspulen 15 bestehen hier, im Gegensatz zu den Formspulen 15 der Fig. 2, aus mehreren Teilleitern 22, die ihrerseits von Teilleiterisolierungen 23 vollständig umhüllt oder zumindest dort isolierend voneinander getrennt sind, wo sie aneinander liegen. In der linken Variante befinden sich in jeder Formspule 15 je zwei Teilleiter 22 nebeneinander und viele Teilleiter 22 übereinander. In der rechten Variante befinden sich in jeder Formspule 15 viele Teilleiter 22 übereinander, aber keine nebeneinander. Jede Formspule 15 weist eine Hauptisolierung 16 auf, an deren Längsseiten durch die Prägung, wie oben beschrieben, die Hauptisolierung 16 zurücktritt, so dass sich dann ein Abstand zwischen einer Nutwandung 19 und der Hauptisolierung 16 ergibt. Dies gestaltet dann einen axial verlaufenden Kühlkanal 9 in einem Stator 2. Die Formspulen 15 werden in die Nut 18 über einen Nutschlitz 20 radial eingesetzt. Die Nutwandungen 19 sind parallel oder mit einem geringen Öffnungswinkel Richtung Luftspalt versehen, um die Montage der Formspulen 15 zu erleichtern. Der Nutschlitz 20 kann durch einen Nutverschluss 21 abgeschlossenen werden, um das Wicklungssystem, in diesem Fall die Formspulen 15, in der Nut 18 dauerhaft zu positionieren. Je nach Ausführung des Nutverschlusses 21 gestaltet dieser auch das Magnetfeld des Luftspaltes im Betrieb einer dynamoelektrischen Maschine 1 mit. Gut zu erkennen ist, dass die Kühlkanäle 9 von Vertiefungen der Hauptisolation 16, und nicht von Vertiefungen der Teilleiterisolation 23 gebildet werden.

Durch die reduzierte radiale Dicke der Hauptisolierung 16 an den vorgegebenen Bereichen der Formspule 15 verschlechtert sich die Isolation nicht u.a. auch deshalb, weil eine Ölkühlung eingesetzt wird.

## Patentansprüche

1. Windkraftanlage mit zumindest einer dynamoelektrischen Maschine (1) mit einem Stator (2) und einem Rotor (3),
wobei zumindest der Stator (2) flüssigkeitsgekühlt ist,
wobei zumindest der Stator (2) ein Wicklungssystem aufweist, das in Nuten (18) eines magnetisch leitfähigen Körpers des Stators (2) eingebettet ist,
wobei das Wicklungssystem zwischen einem Leiter des Wicklungssystems und einer Nutwandung (19) eine Hauptisolierung (16) aufweist,
wobei zwischen Hauptisolierung (16) und Nutwandung (19) zumindest ein axial verlaufender Kühlkanal (9) vorgesehen ist, indem die Hauptisolierung (16) mindestens eine Vertiefung aufweist, sodass der Kühlkanal (9) oder mehrere Kühlkanäle (9) direkt berührend, also ohne Nutisolation dazwischen, an die Nutwandung (19) grenzen,
wobei ein durch einen Luftspalt der dynamoelektrischen Maschine (1) verlaufendes Spaltrohr (8) vorgesehen ist, das Stator (2) und Rotor (3) voneinander trennt und es ermöglicht, unterschiedliche Kühlmedien für den Stator (2) und den Rotor (3) vorzusehen, wobei auch die Wickelköpfe (7) flüssigkeitsgekühlt sind,
und wobei zumindest einer der Kühlkanäle (9) in einer Kühlkanalprägung (17) der Hauptisolierung (16) vorgesehen ist.

2. Windkraftanlage mit zumindest einer dynamoelektrischen Maschine (1) nach Anspruch 1, **dadurch gekennzeichnet, dass** das Wicklungssystem aus Formspulen (15) aufgebaut ist.

3. Windkraftanlage mit zumindest einer dynamoelektrischen Maschine (1) nach Anspruch 2, **dadurch gekennzeichnet, dass** die Spulenschenkel der Formspulen (15) beidseitig Kühlkanalprägungen (17) aufweisen.

4. Windkraftanlage mit zumindest einer dynamoelektrischen Maschine (1) nach einem der vorhergehenden Ansprüche, **dadurch gekennzeichnet, dass** die Nutwandungen (19) parallel verlaufen.

5. Windkraftanlage mit zumindest einer dynamoelektrischen Maschine (1) nach einem der vorhergehenden Ansprüche, **dadurch gekennzeichnet, dass** die Kühlkanäle (9), insbesondere die Kühlkanalprägungen (17), axial über den magnetisch leitfähigen Körper ragen.

6. Windkraftanlage mit zumindest einer dynamoelektrischen Maschine (1) nach einem der vorhergehenden Ansprüche, **dadurch gekennzeichnet, dass** der magnetisch leitfähige Körper, insbesondere als Blechpaket (4) ausgeführt ist.

7. Windkraftanlage mit zumindest einer dynamoelektrischen Maschine (1) nach einem der vorhergehenden Ansprüche, **dadurch gekennzeichnet, dass** der magnetisch leitfähige Körper axial in mindestens zwei Teilkörper (5) unterteilt ist, so dass sich radiale Kühlkanäle (10) ergeben.

8. Verfahren zum Herstellen eines oder mehrerer Kühlkanäle (9) einer dynamoelektrischen Maschine einer Windkraftanlage nach einem der vorhergehenden Ansprüche, **dadurch gekennzeichnet, dass** der oder die Kühlkanäle (9) dadurch geprägt wird/werden, dass mittels eines Stempels und/oder einer Presse die Hauptisolierung (16) in vorgegebenen Bereichen zusammengedrückt wird.

## Claims

1. Wind turbine having at least one dynamoelectric machine (1) having a stator (2) and a rotor (3),
wherein at least the stator (2) is liquid-cooled,
wherein at least the stator (2) has a winding system which is embedded in slots (18) of a magnetically conductive body of the stator (2),
wherein the winding system has main insulation (16) between a conductor of the winding system and a slot wall (19),
wherein at least one axially extending cooling channel (9) is provided between the main insulation (16) and the slot wall (19) in that the main insulation (16) has at least one recess, such that the cooling channel (9) or a plurality of cooling channels (9) border(s) the slot wall (19) with direct contact, i.e. without slot insulation in between,
wherein a can (8) which extends through an air gap of the dynamoelectric machine (1) is provided, which separates the stator (2) and rotor (3) from one another and makes it possible to provide different cooling media for the stator (2) and the rotor (3), wherein the end windings (7) are also liquid-cooled,
and wherein at least one of the cooling channels (9) is provided in a cooling-channel impression (17) of the main insulation (16).

2. Wind turbine having at least one dynamoelectric machine (1) according to Claim 1, **characterized in that** the winding system is constructed from form-wound coils (15) .

3. Wind turbine having at least one dynamoelectric machine (1) according to Claim 2, **characterized in that** the coil legs of the form-wound coils (15) have cooling-channel impressions (17) on both sides.

4. Wind turbine having at least one dynamoelectric machine (1) according to any of the preceding claims, **characterized in that** the slot walls (19) extend parallel to one another.

5. Wind turbine having at least one dynamoelectric machine (1) according to any of the preceding claims, **characterized in that** the cooling channels (9), in particular the cooling-channel impressions (17), project axially over the magnetically conductive body.

6. Wind turbine having at least one dynamoelectric machine (1) according to any of the preceding claims, **characterized in that** the magnetically conductive body is embodied in particular as a laminated core (4).

7. Wind turbine having at least one dynamoelectric machine (1) according to any of the preceding claims, **characterized in that** the magnetically conductive body is subdivided axially into at least two partial bodies (5), such that radial cooling channels (10) are brought about.

8. Method for producing one or more cooling channels (9) of a dynamoelectric machine of a wind turbine according to any of the preceding claims, **characterized in that** the cooling channel or channels (9) is/are impressed **in that** a stamp and/or a press is used to compress the main insulation (16) in predefined regions.

## Revendications

1. Installation éolienne avec au moins une machine dynamoélectrique (1) avec un stator (2) et un rotor (3), au moins le stator (2) étant refroidi par un liquide,
au moins le stator (2) présentant un système d'enroulement qui est encastré dans des rainures (18) d'un corps magnétiquement conducteur du stator (2),
le système d'enroulement présentant une isolation principale (16) entre un conducteur du système d'enroulement et une paroi de rainure (19),
au moins un canal de refroidissement (9) s'étendant axialement étant prévu entre l'isolation principale (16) et la paroi de rainure (19) par le fait que l'isolation principale (16) présente au moins un renfoncement, de telle sorte que le canal de refroidissement (9) ou plusieurs canaux de refroidissement (9) sont directement en contact avec la paroi de rainure (19), c'est-à-dire sans isolation de rainure entre eux,
un tube d'entrefer (8) qui s'étend à travers un entrefer de la machine dynamoélectrique (1) étant prévu, qui sépare le stator (2) et le rotor (3) l'un de l'autre et qui permet de prévoir des fluides de refroidissement différents pour le stator (2) et le rotor (3), les têtes d'enroulement (7) étant également refroidies par un liquide,
et au moins l'un des canaux de refroidissement (9) étant prévu dans une estampe de canal de refroidissement (17) de l'isolation principale (16).

2. Installation éolienne avec au moins une machine dynamoélectrique (1) selon la revendication 1, **caractérisée en ce que** le système d'enroulement est construit à partir de bobines de forme (15).

3. Installation éolienne avec au moins une machine dynamoélectrique (1) selon la revendication 2, **caractérisée en ce que** les branches de bobine des bobines de forme (15) présentent des deux côtés des estampes de canaux de refroidissement (17).

4. Installation éolienne avec au moins une machine dynamoélectrique (1) selon l'une quelconque des revendications précédentes, **caractérisée en ce que** les parois de rainure (19) s'étendent en parallèle.

5. Installation éolienne avec au moins une machine dynamoélectrique (1) selon l'une quelconque des revendications précédentes, **caractérisée en ce que** les canaux de refroidissement (9), notamment les estampes de canaux de refroidissement (17), dépassent axialement du corps magnétiquement conducteur.

6. Installation éolienne avec au moins une machine dynamoélectrique (1) selon l'une quelconque des revendications précédentes, **caractérisée en ce que** le corps magnétiquement conducteur est réalisé notamment sous forme de paquet de tôles (4).

7. Installation éolienne avec au moins une machine dynamoélectrique (1) selon l'une quelconque des revendications précédentes, **caractérisée en ce que** le corps magnétiquement conducteur est divisé axialement en au moins deux corps partiels (5), de telle sorte qu'il en résulte des canaux de refroidissement radiaux (10).

8. Procédé de fabrication d'un ou de plusieurs canaux de refroidissement (9) d'une machine dynamoélectrique d'une installation éolienne selon l'une quelconque des revendications précédentes, **caractérisé en ce que** le ou les canaux de refroidissement (9) sont estampés en comprimant l'isolation principale (16) dans des zones prédéterminées au moyen d'un poinçon et/ou d'une presse.
